# EUROPÄISCHE PATENTSCHRIFT

(11) **EP 2 951 431 B1**
(45) Veröffentlichungstag und Bekanntmachung des Hinweises auf die Patenterteilung: **21.11.2018**
(21) Anmeldenummer: 14711687.5
(22) Anmeldetag: 03.02.2014
(51) Int. Cl.: F03D 7/02

(54) **STEUERVORRICHTUNG FÜR EIN GIERSYSTEM EINER WINDKRAFTANLAGE**
CONTROL DEVICE FOR A YAW SYSTEM OF A WIND POWER PLANT
DISPOSITIF DE COMMANDE POUR UN SYSTÈME DE LACET D'ÉOLIENNE

(30) Priorität: 01.02.2013 DE 102013101011
(43) Veröffentlichungstag der Anmeldung: 09.12.2015
(73) Patentinhaber: 2-B Energy Holding B.V., 7556 PE Hengelo (NL)
(72) Erfinder: JAKOBSSON, Johan Mikael, Grants Pass, Oregon 97527 (US); PEELS, Huibertus, NL-7631 HS Ootmarsum (NL)
(74) Vertreter: Bossmeyer, Jörg Peter
(86) Internationale Anmeldenummer: PCT/EP2014/052066
(87) Internationale Veröffentlichungsnummer: WO 2014/118373

(56) Entgegenhaltungen:
- EP-A1- 1 647 708
- EP-A1- 2 495 435
- EP-A2- 2 101 058
- WO-A1-02/099276
- DE-T2- 69 703 622
- DE-U1- 20 017 994
- US-A1- 2011 138 945

## Beschreibung

Die Erfindung betrifft eine Steuervorrichtung für ein Giersystem einer Windkraftanlage, mit wenigstens einer zwischen eine Tragstruktur und einen an der Tragsstruktur um eine Gierachse drehbar gelagerten Maschinenträger geschalteten und einen Hauptantrieb und ein Zahnradgetriebe umfassenden Stelleinrichtung und einem in den Triebstrang der Stelleinrichtung geschalteten Hilfsantrieb, mittels welchem ein Verzahnungsspiel des Zahnradgetriebes reduzierbar ist.

Die WO 02/099276 A1 offenbart eine Windenergieanlage mit einem Rotor und einem Generator sowie einem Maschinenhaus, welches den Generator aufnimmt. Zur Verstellung des Maschinenhauses ist ein Azimutantrieb vorgesehen, der in einer Asynchronmaschine gebildet ist und eine erste Läufer/Ständer-Anordnung aufweist, wobei der Läufer mit einer Welle verbunden ist. Ferner ist wenigstens eine zweite Läufer/Ständer-Anordnung ausgebildet, welche von der ersten Läufer/Ständer-Anordnung elektrisch getrennt ist, wobei der Läufer der zweiten Läufer/Ständer-Anordnung ebenfalls mit der Welle verbunden ist.

Aus der DE 697 03 622 T2 ist eine Vorrichtung für eine Windkraftanlage bekannt, die für die Übertragung und Dämpfung von Gierbewegungen vorgesehen ist, wobei die Vorrichtung ein Gier-Lager und einen Gierbewegungsdrehantrieb, die eine Rotation der Maschinenanlage um eine vertikale Achse ermöglichen sowie eine Antriebsvorrichtung zum Antrieb der Maschinenanlage um eine vertikale Achse umfasst. Ferner ist eine Kupplung zur Übertragung des Momentes der Antriebsvorrichtung zu dem Gierbewegungsdrehantrieb vorgesehen und derart angeordnet, dass das durch die Kupplung übertragene Moment durch die Differenz der Drehbewegungsgeschwindigkeit der Antriebs- und Abtriebswelle der Kupplung ermittelt wird. Die Antriebsvorrichtung weist eine Bremse, einen durch die Bremse blockierbaren Elektromotor und ein mit dem Elektromotor unter Zwischenschaltung der Kupplung gekoppeltes Zahnradgetriebe auf.

Nachteilig an dieser Vorrichtung ist, dass das Getriebe durch Lastwechsel stark beansprucht werden kann, die durch Windrichtungsänderungen hervorgerufen werden. Dies gilt insbesondere im gebremsten oder blockierten Zustand des Elektromotors.

Ausgehend hiervon liegt der Erfindung die Aufgabe zugrunde, die vorgenannte Beanspruchung des Zahnradgetriebes reduzieren zu können.

Diese Aufgabe wird erfindungsgemäß durch eine Steuervorrichtung nach Anspruch 1 gelöst. Bevorzugte Weiterbildungen der Erfindung sind in den Unteransprüchen und in der nachfolgenden Beschreibung gegeben.

Die erfindungsgemäße Steuervorrichtung, insbesondere für ein Giersystem einer Windkraftanlage, weist wenigstens eine zwischen eine Tragstruktur und einen an der Tragsstruktur um eine Gierachse drehbar gelagerten Maschinenträger geschaltete und einen Hauptantrieb und ein, insbesondere mit diesem gekoppeltes, Zahnradgetriebe umfassende Stelleinrichtung und einen in den Triebstrang der Stelleinrichtung geschalteten Hilfsantrieb auf, mittels welchem ein Verzahnungsspiel des Zahnradgetriebes reduzierbar ist, wobei der Hilfsantrieb einen Hilfsmotor und ein einen Planententräger, ein Sonnenrad und ein innenverzahntes Hohlrad umfassendes Planetengetriebe aufweist, welches mit seinem Planetenträger und mit seinem Sonnenrad in den Triebstrang der Stelleinrichtung geschaltet ist, wobei das Hohlrad durch den Hilfsmotor drehbar ist.

Das Zahnradgetriebe wird bei Lastwechseln insbesondere aufgrund seines Verzahnungsspiels belastet, da durch dieses Spiel über einen begrenzten Drehwinkel eine näherungsweise freie Drehbarkeit des Maschinenträgers relativ zu der Tragstruktur ermöglicht wird, ohne alle Zahnräder des Zahnradgetriebes mitzunehmen. Dies führt dazu, dass der Maschinenträger durch den Wind im Umfang des begrenzten Drehwinkels näherungsweise frei beschleunigt werden kann, bevor die ineinander greifenden Zähne der an der Drehbewegung des Maschinenträgers beteiligten Zahnräder des Zahnradgetriebes aneinander stoßen. Insbesondere bei gebremstem oder blockiertem Hauptantrieb können die Zahnräder des Getriebes dadurch stark belastet werden. Durch den in den Triebstrang der Stelleinrichtung geschalteten Hilfsantrieb ist das Verzahnungsspiel reduzierbar. Im Idealfall werden die ineinandergreifenden Zähne der an der Drehbewegung des Maschinenträgers beteiligten Zahnräder des Zahnradgetriebes dabei derart aneinander angelegt, dass kein Verzahnungsspiel mehr auftritt. Praktisch ist aber zumindest eine Reduzierung des Verzahnungsspiels erzielbar. Der Hilfsantrieb bildet somit einen Verzahnungsspielreduzierantrieb.

Das Zahnradgetriebe ist insbesondere eingangsseitig mit dem Hauptantrieb und ausgangsseitig mit dem Maschinenträger oder mit der Tragstruktur gekoppelt. Das Zahnradgetriebe ist vorzugsweise ein Untersetzungsgetriebe.

Eine Eingangswelle des Zahnradgetriebes ist insbesondere im Umfang oder Rahmen des Verzahnungsspiels relativ zu einer Ausgangswelle des Zahnradgetriebes begrenzt drehbar. Zur Reduzierung des Verzahnungsspiels, ist somit die Eingangswelle relativ zu der Ausgangswelle zu drehen. Bevorzugt ist mittels des Hilfsantriebs die Eingangswelle des Zahnradgetriebes, vorzugsweise unter Reduzierung des Verzahnungsspiels, relativ zu der Ausgangswelle des Zahnradgetriebes drehbar. Die Drehbarkeit der Eingangswelle relativ zur Ausgangswelle ist insbesondere im Umfang des Verzahnungsspiels möglich und erfolgt bevorzugt maximal im Umfang des Verzahnungsspiels.

Bevorzugt ist der Hauptantrieb ein elektrischer Antrieb. Insbesondere ist oder umfasst der Hauptantrieb eine oder wenigstens eine elektrische Maschine, beispielsweise einen oder wenigstens einen Elektromotor. Alternativ kann der Hauptantrieb aber auch ein hydraulischer Antrieb oder ein anderer Antrieb sein.

Vorteilhaft ist eine elektrische Stromversorgung vorgesehen oder vorzusehen, die insbesondere eine Stromversorgung für den Hauptantrieb bildet. Vorzugsweise ist der Hauptantrieb mittels der Stromversorgung mit elektrischem Strom versorgbar. Dies gilt insbesondere dann, wenn der Hauptantrieb ein elektrischer Antrieb, wie z.B. ein Elektromotor, ist. Handelt es sich bei dem Hauptantrieb um einen anderen Antrieb, wie z.B. um einen hydraulischen Antrieb, so wird bevorzugt auch dieser, insbesondere mittelbar, durch die Stromversorgung versorgt. Beispielsweise umfasst der hydraulische Antrieb wenigstens eine elektrisch betriebene Hydraulikpumpe, die vorzugsweise mittels der Stromversorgung mit elektrischem Strom versorgt wird. Bevorzugt ist der Hauptantrieb mittels der Stromversorgung unmittelbar oder mittelbar mit elektrischem Strom versorgbar. Insbesondere fällt bei einem Ausfall der Stromversorgung auch der Hauptantrieb aus. Die Stromversorgung ist beispielsweise durch ein elektrisches Netz gegeben. Ferner kann die Stromversorgung eine Notstromversorgung umfassen. Der elektrische Strom kann ein Gleichstrom oder ein Wechselstrom, insbesondere ein Drehstrom sein. Das elektrische Netz ist bevorzugt ein Wechselstromnetz, vorzugsweise ein Drehstromnetz.

Eine Drehung oder Drehbewegung des Maschinenträgers relativ zu der Tragstruktur um die Gierachse ist bevorzugt mittels der Stelleinrichtung, insbesondere mittels des Hauptantriebs, steuerbar oder regelbar. Vorteilhaft ist wenigstens eine Steuereinrichtung vorgesehen oder vorzusehen, mittels welcher der Hauptantrieb steuerbar oder regelbar ist. Insbesondere ist der Hauptantrieb, vorzugsweise mittels der Steuereinrichtung, derart steuerbar oder regelbar, dass eine Drehung oder Drehbewegung des Maschinenträgers relativ zu der Tragstruktur um die Gierachse erzeugbar und/oder bremsbar und/oder dämpfbar ist. Die Steuereinrichtung ist bevorzugt eine elektrische Steuereinrichtung und vorteilhaft elektrisch mit dem Hauptantrieb verbunden. Insbesondere umfasst die Steuereinrichtung einen oder wenigstens einen Umrichter und/oder Frequenzumrichter. Vorzugsweise ist mittels der Steuereinrichtung der dem Hauptantrieb zugeführte oder zuführbare Strom steuerbar oder regelbar. Bevorzugt ist mittels der Steuereinrichtung die Stromstärke und/oder Amplitude und/oder Frequenz und/oder Phase dieses Stroms steuerbar oder regelbar. Insbesondere ist die Steuereinrichtung mittels der Stromversorgung mit elektrischem Strom versorgbar.

An dem Maschinenträger ist bevorzugt ein durch Wind um eine Rotorachse drehbarer Rotor drehbar gelagert. Die Rotorachse ist vorzugsweise quer oder näherungsweise quer zur Gierachse ausgerichtet. Insbesondere ist die Rotorachse horizontal oder näherungsweise horizontal ausgerichtet. Bevorzugt ist die Rotorachse gegenüber der Horizontalen geringfügig geneigt. Vorteilhaft ist der Rotor an der Lee-Seite des Maschinenträgers angeordnet. Alternativ kann der Rotor aber auch an der Luv-Seite des Maschinenträgers angeordnet sein.

Der Rotor umfasst bevorzugt eine Rotornabe und ein oder mehrere an der Rotornabe gelagerte Rotorblätter, die sich insbesondere quer oder näherungsweise quer zur Rotorachse von der Rotornabe wegerstrecken. Vorzugsweise ist das oder jedes der Rotorblätter an der Rotornabe um eine Blattachse drehbar gelagert, die insbesondere quer oder näherungsweise quer zur Rotorachse verläuft. Die Anzahl der Rotorblätter beträgt bevorzugt eins, wenigstens eins, zwei, wenigstens zwei, drei oder wenigstens drei. Insbesondere sind die Rotorblätter rings der Rotorachse gleichmäßig verteilt angeordnet.

Der Maschinenträger trägt bevorzugt einen elektrischen Generator, der von dem Rotor antreibbar ist. Insbesondere ist der Generator mit einer Rotorwelle des Rotors verbunden. Zwischen den Generator und den Rotor und/oder zwischen den Generator und die Rotorwelle kann ein Rotorgetriebe geschaltet sein.

Die Tragstruktur umfasst oder bildet bevorzugt einen Turm, der insbesondere mit einem Fundament oder einer Gründung im Erdboden oder Seeboden verankert ist. Die Längsachse der Tragstruktur und/oder des Turms fällt bevorzugt mit der Gierachse zusammen. Insbesondere ist die Gierachse vertikal oder näherungsweise vertikal ausgerichtet. Der Maschinenträger ist vorzugsweise auf der Tragstruktur angeordnet.

Der Hauptantrieb umfasst bevorzugt eine Antriebswelle, die insbesondere mittels des Hauptantriebs drehbar ist. Ist oder umfasst der Hauptantrieb einen Motor oder Elektromotor, so handelt es sich bei der Antriebswelle insbesondere um die Motorwelle des Motors oder Elektromotors oder z.B. um eine mit der Motorwelle des Motors oder Elektromotors drehstarr verbundene Welle. Ferner umfasst der Hauptantrieb vorzugsweise einen Ständer und einen relativ zu diesem drehbaren Läufer, der insbesondere die Antriebswelle umfasst und/oder starr oder drehstarr mit dieser verbunden ist. Der Ständer umfasst bevorzugt wenigstens eine, vorzugsweise mehrere, elektrische Ständerwicklungen. Der Läufer umfasst bevorzugt wenigstens eine, vorzugsweise mehrere, elektrische Läuferwicklungen. Der Läufer kann auch als Käfigläufer ausgebildet sein, sodass die Läuferwicklung insbesondere mehrere Leiterstäbe umfasst, die an ihren Enden elektrisch miteinander verbunden, vorzugsweise kurzgeschlossen, sind. In diesem Fall bildet oder umfasst der Hauptantrieb z.B. eine Asynchronmaschine. Der Hauptantrieb kann auch als permanenterregter Elektromotor ausgebildet sein. In diesem Fall trägt der Läufer oder der Ständer wenigstens einen, vorzugsweise mehrere, Permanentmagnete, insbesondere anstelle der jeweiligen Wicklung oder Wicklungen. Bevorzugt ist der Hauptantrieb somit ein Elektromotor, der beispielsweise als Gleichstrommotor oder als Wechselstrommotor, insbesondere als Drehstrommotor ausgebildet ist.

Der Ständer des Hauptantriebs ist bevorzugt fest, insbesondere starr oder drehstarr, mit dem Maschinenträger oder mit der Tragstruktur verbunden. Vorzugsweise umfasst der Hauptantrieb ein starr oder drehstarr mit dem Ständer verbundenes und/oder diesen umfassendes Antriebs- oder Motorgehäuse. Vorteilhaft ist das Antriebs- oder Motorgehäuse fest, insbesondere starr oder drehstarr, mit dem Maschinenträger oder mit der Tragstruktur verbunden.

Die Stelleinrichtung umfasst bevorzugt eine Ausgangswelle, die, insbesondere drehstarr, mit dem Maschinenträger oder mit der Tragstruktur verbunden oder gekoppelt ist. Vorteilhaft ist mit der Ausgangswelle ein Ritzel, insbesondere starr oder drehstarr oder elastisch, verbunden, welches mit einem Zahnkranz kämmt und/oder ineinander greift, der, vorzugsweise fest, insbesondere starr oder drehstarr oder verwindungsweich, mit dem Maschinenträger oder der Tragstruktur verbunden ist. Vorteilhaft ist die Ausgangswelle der Stelleinrichtung, vorzugsweise drehelastisch oder fest, insbesondere starr oder drehstarr, mit der Ausgangswelle des Zahnradgetriebes verbunden oder durch diese gebildet.

Bevorzugt ist der Maschinenträger durch Wind relativ zu der Tragstruktur um die Gierachse drehbar. Vorteilhaft ist der Rotor dabei an der Lee-Seite des Maschinenträgers angeordnet. Insbesondere handelt es sich bei dem Giersystem um ein passives Giersystem.

Gemäß einer Ausgestaltung ist der Hauptantrieb, vorzugsweise mittels der Steuereinrichtung, als Dämpfer betreibbar, mittels welchem eine, insbesondere durch Wind hervorgerufene, Drehung oder Drehbewegung des Maschinenträgers relativ zu der Tragstruktur um die Gierachse dämpfbar ist. Dieser Dämpfer bildet bevorzugt einen aktiven Dämpfer. Darunter ist insbesondere zu verstehen, dass dieser Dämpfer bei Ausfall der Stromversorgung nicht funktionsfähig ist und/oder dass die dämpfende Eigenschaft dieses Dämpfers und/oder die Dämpfung der oder einer Drehung oder Drehbewegung des Maschinenträgers relativ zu der Tragstruktur um die Gierachse mittels der Steuereinrichtung steuerbar ist.

Bevorzugt ist ein Dämpfungsglied vorgesehen, mittels welchem oder mit Hilfe dessen eine, insbesondere durch Wind hervorgerufene, Drehbewegung des Maschinenträgers relativ zu der Tragstruktur um die Gierachse dämpfbar ist. Das Dämpfungsglied ist bevorzugt ein passives Dämpfungsglied. Darunter ist insbesondere zu verstehen, dass das Dämpfungsglied auch bei Ausfall der Stromversorgung funktionsfähig ist und/oder dass die dämpfende Eigenschaft des Dämpfungsglieds und/oder die Dämpfung der oder einer Drehbewegung des Maschinenträgers relativ zu der Tragstruktur um die Gierachse nicht aktiv steuerbar ist. Allerdings kann die Dämpfung abhängig von der Geschwindigkeit und/oder einer Geschwindigkeitsänderung der Drehbewegung des Maschinenträgers relativ zu der Tragstruktur um die Gierachse sein. Das Dämpfungsglied ist bevorzugt in den Triebstrang der Stelleinrichtung geschaltet. Insbesondere umfasst die Stelleinrichtung das Dämpfungsglied. Vorteilhaft umfasst das Dämpfungsglied eine Eingangswelle und eine Ausgangswelle.

Bevorzugt bildet oder umfasst das Dämpfungsglied einen hydraulischen Dämpfer. Bei dem hydraulischen Dämpfer handelt es sich z.B. um eine hydrodynamische Kupplung oder Visko-Kupplung. Vorteilhaft umfasst das Dämpfungsglied einen Impeller mit einem Impellergehäuse und einem in diesem drehbaren Innenteil, welches vorzugsweise fest, insbesondere starr oder drehstarr, mit einer der Wellen des Dämpfungsglieds, beispielsweise mit der Ausgangswelle des Dämpfungsglieds, verbunden ist. Das Impellergehäuse ist vorzugsweise fest, insbesondere starr oder drehstarr, mit einer anderen der Wellen des Dämpfungsglieds, beispielsweise mit der Eingangswelle des Dämpfungsglieds, verbunden. Alternativ ist das Innenteil z.B. fest, insbesondere starr oder drehstarr, mit der Eingangswelle des Dämpfungsglieds, verbunden, wobei das Impellergehäuse z.B. fest, insbesondere starr oder drehstarr, mit der Ausgangswelle des Dämpfungsglieds verbunden ist. Das Innenteil ist z.B. ein Propeller. Vorteilhaft ist in dem Gehäuse eine Flüssigkeit, insbesondere eine Hydraulikflüssigkeit vorgesehen oder vorzusehen. Das Dämpfungsglied ist bevorzugt zwischen den Hauptantrieb und das Zahnradgetriebe, insbesondere zwischen den Hauptantrieb und den Hilfsantrieb geschaltet. Es ist aber auch möglich, das Dämpfungsglied zwischen den Hilfsantrieb und das Zahnradgetriebe zu schalten.

Gemäß einer Weiterbildung ist eine Antriebsbremse vorgesehen, mittels welcher der Hauptantrieb bremsbar und/oder blockierbar ist. Bevorzugt ist die Antriebsbremse mit der Antriebswelle, insbesondere fest, vorzugsweise starr oder drehstarr, verbunden. Die Antriebsbremse ist insbesondere in Kombination mit dem Dämpfungsglied sinnvoll, sodass bei gebremstem oder blockiertem Hauptantrieb eine Dämpfung einer, insbesondere durch Wind hervorgerufenen, Drehbewegung des Maschinenträgers relativ zu der Tragstruktur um die Gierachse möglich ist. Vorteilhaft ist bei Ausfall der Stromversorgung der Hauptantrieb mittels der Antriebsbremse, insbesondere automatisch, bremsbar und/oder blockierbar. Die Antriebsbremse ist bevorzugt in den bremsenden und/oder blockierenden Zustand vorgespannt, insbesondere durch wenigstens eine Feder. Vorteilhaft ist die Antriebsbremse durch wenigstens einen Elektromagneten in den gelösten Zustand überführbar, insbesondere gegen die Kraft der Feder. Der Elektromagnet ist dazu bevorzugt mit elektrischem Strom versorgbar, der insbesondere von der Stromversorgung zur Verfügung stellbar ist. Der Hauptantrieb ist vorzugsweise zwischen die Antriebsbreme und das Dämpfungsglied oder den Hilfsantrieb geschaltet. Handelt es sich bei dem Hauptantrieb um einen Motor oder Elektromotor, kann die Antriebsbremse auch als Motorbremse bezeichnet werden.

Gemäß einer Ausgestaltung ist mit dem Hauptantrieb die oder eine Steuereinrichtung verbunden, insbesondere elektrisch verbunden, mittels welcher der Hauptantrieb, insbesondere bei vorhandener Stromversorgung, steuerbar oder regelbar ist. Vorteilhaft ist die oder eine, insbesondere durch Wind hervorgerufene, Drehung oder Drehbewegung des Maschinenträgers relativ zu der Tragstruktur um die Gierachse durch den Hauptantrieb dämpfbar. Wie oben bereits angesprochen, wird der Hauptantrieb somit insbesondere nicht zum Drehen des Maschinenträgers, sondern vorzugsweise zum Dämpfen der oder einer, insbesondere durch Wind hervorgerufenen, Drehung oder Drehbewegung des Maschinenträgers relativ zu der Tragstruktur um die Gierachse eingesetzt. Dies ist insbesondere dann sinnvoll, wenn der Rotor auf der Lee-Seite des Maschinenträgers angeordnet ist. In diesem Fall ist der Maschinenträger durch den Wind in eine Stellung drehbar, in welcher die Rotorachse parallel oder näherungsweise parallel zur Windrichtung ausgerichtet ist. Dies funktioniert im Prinzip wie bei einer Windfahne. Die erfindungsgemäße Steuervorrichtung bildet in diesem Sinne bevorzugt eine Dämpfungsvorrichtung. Da es aufgrund von Turbulenzen, Windböen, Windscherung etc. zu einer ungewollten Drehbewegung des Maschinenträges kommen kann, welche diesen aus der gewünschten Position herausdreht, ist eine solche Drehbewegung mittels des Hauptantriebs durch Aufbau eines Gegenmoments dämpfbar. Im Falle eines Stromausfalls und/oder bei gebremsten und/oder blockiertem Hauptantrieb übernimmt diese Dämpfungsfunktion insbesondere das Dämpfungsglied. Bevorzugt ist es auch möglich, den Maschinenträger aktiv mittels des Hauptantriebs zu drehen. Die erfindungsgemäße Steuervorrichtung bildet in diesem Sinne insbesondere eine Antriebsvorrichtung. Dies ist z.B. bei Korrekturen eines größeren Gierfehlers oder zu Wartungszwecken sinnvoll, beispielsweise um eine Verdrehung von zwischen dem Maschinenträger und der Tragstruktur verlaufenen Leitungen rückgängig zu machen. Ferner ist ein aktives Drehen des Maschinenträgers dann sinnvoll, wenn der Rotor auf der Luv-Seite des Maschinenträgers angeordnet ist. Bevorzugt bildet die erfindungsgemäße Steuervorrichtung eine Dämpfungs- und/oder Antriebsvorrichtung.

Bevorzugt ist mittels des Hilfsmotors die Eingangswelle relativ zu der Ausgangswelle, insbesondere in zwei einander entgegengesetzte Drehrichtungen, drehbar. Der Hilfsmotor ist z.B. ein hydraulischer oder ein elektrischer Motor. Ferner kann der Hilfsmotor als rotierender oder rotatorischer Motor oder als Linearmotor ausgebildet sein. Bevorzugt ist der Hilfsmotor über ein oder wenigstens ein Getriebe mit dem Triebstrang der Stelleinrichtung verbunden.

Insbesondere sind an dem Planetenträger ein oder mehrere Planetenräder drehbar gelagert, die zwischen dem Sonnenrad und dem Hohlrad angeordnet sind. Vorzugsweise kämmen das oder die Planetenräder mit dem Sonnenrad und mit dem Hohlrad. Das Sonnenrad ist bevorzugt in dem Hohlrad angeordnet. Vorzugsweise ist das Sonnenrad koaxial mit dem Hohlrad angeordnet.

Der Hilfsmotor ist vorzugsweise ein elektrischer Motor. Bevorzugt ist der Hilfsantrieb und/oder der Hilfsmotor mittels der Stromversorgung mit elektrischem Strom versorgbar. Der Hilfsantrieb umfasst insbesondere ein Hilfsgetriebe, welches zwischen den Hilfsmotor und das Gestell oder Hohlrad geschaltet ist. Das Hilfsgetriebe ist oder umfasst z.B. ein Keilgetriebe und/oder ein Flachgetriebe und/oder eine Zahngetriebe und/oder einen Riemengetriebe und/oder ein Schneckengetriebe und/oder ein Winkelgetriebe und/oder eine Hebelanordnung und/oder ein anderes Getriebe. Bevorzugt ist eine Hilfssteuerung vorgesehen, mittels welcher der Hilfsantrieb und/oder der Hilfsmotor steuerbar oder regelbar ist. Die Hilfssteuerung ist insbesondere eine elektrische Steuerung und bevorzugt elektrisch mit dem Hilfsantrieb und/oder dem Hilfsmotor verbunden. Vorzugsweise ist die Hilfssteuerung mittels der Stromversorgung mit elektrischem Strom versorgbar.

Bevorzugt ist das Planentengetriebe zwischen den Hauptantrieb und das Zahnradgetriebe geschaltet. Insbesondere ist das Planentengetriebe zwischen das Dämpfungsglied und das Zahnradgetriebe oder zwischen den Hauptantrieb und das Dämpfungsglied geschaltet. Vorteilhaft ist der Planetenträger mit der Antriebswelle des Hauptantriebs oder mit der Ausgangswelle des Dämpfungsglieds, insbesondere fest, vorzugsweise starr oder drehstarr, verbunden. Ferner ist das Sonnenrad bevorzugt mit der Eingangswelle des Dämpfungsglieds oder mit der Eingangswelle des Zahnradgetriebes, insbesondere fest, vorzugsweise starr oder drehstarr, verbunden. Alternativ ist beispielsweise das Sonnenrad mit der Antriebswelle des Hauptantriebs oder mit der Ausgangswelle des Dämpfungsglieds, insbesondere fest, vorzugsweise starr oder drehstarr, verbunden. In diesem Fall ist der Planetenträger z.B. mit der Eingangswelle des Dämpfungsglieds oder mit der Eingangswelle des Zahnradgetriebes, insbesondere fest, vorzugsweise starr oder drehstarr, verbunden. Bevorzugt ist die Ausgangswelle des Zahnradgetriebes mit dem Maschinenträger oder mit der Tragstruktur gekoppelt.

Gemäß einer Ausgestaltung umfasst der Hilfsantrieb eine Hilfsbremse, mittels welcher das Gestell und/oder das Hohlrad und/oder der Hilfsmotor bremsbar und/oder blockierbar ist. Bevorzugt wird das Gestell und/oder das Hohlrad und/oder der Hilfsmotor mittels der Hilfsbremse gebremst oder blockiert, wenn, insbesondere bei vorhandener Stromversorgung, der Hauptantrieb mittels der Steuereinrichtung gesteuert oder geregelt und/oder als Dämpfer betrieben wird. Vorteilhaft ist das Gestell und/oder das Hohlrad und/oder der Hilfsmotor bei Ausfall der Stromversorgung mittels der Hilfsbremse, insbesondere automatisch, bremsbar und/oder blockierbar. Hierdurch kann insbesondere sichergestellt werden, dass bei einem Ausfall der Stromversorgung eine Dämpfung der Drehbewegung des Maschinenträgers relativ zu der Tragstruktur um die Gierachse mittels des Dämpfungsglieds nicht durch den Hilfsantrieb beeinträchtigt wird. Bevorzugt wird das Verzahnungsspiel des Zahnradgetriebes mittels des Hilfsantriebs reduziert, wenn der Hauptantrieb bei vorhandener Stromversorgung durch die Antriebsbremse gebremst oder blockiert ist. In diesem Fall ist die Hilfsbremse insbesondere gelöst.

Das aktuelle Verzahnungsspiel ist insbesondere abhängig von der aktuellen Lage der Ausgangswelle relativ zu der Eingangswelle und ferner von der Drehrichtung der Ausgangswelle relativ zu der Eingangswelle. Beträgt das Verzahnungsspiel in einer Drehrichtung z.B. Null, so ist es in der entgegengesetzten Drehrichtung insbesondere maximal. Vorzugsweise ist die Drehrichtung der Ausgangswelle relativ zu der Eingangswelle abhängig von der Drehrichtung des Maschinenträgers relativ zu der Tragstruktur um die Gierachse, wobei die Drehung des Maschinenträgers insbesondere durch Wind hervorgerufen wird.

Gemäß einer Weiterbildung ist wenigstens eine Sensoranordnung vorgesehen, mittels welcher eine, insbesondere durch Wind hervorgerufene, Drehrichtung des Maschinenträgers relativ zu der Tragstruktur um die Gierachse und/oder eine Drehrichtung der Ausgangswelle relativ zu der Eingangswelle ermittelbar oder abschätzbar ist. Bevorzugt ist die Sensoranordnung mit der Hilfssteuerung verbunden, mittels welcher der Hilfsantrieb in Abhängigkeit von der ermittelten oder abgeschätzten Drehrichtung steuerbar oder regelbar ist. Insbesondere ist die Eingangswelle relativ zu der Ausgangswelle dabei mittels des Hilfsantriebs in einer der ermittelten oder abgeschätzten Drehrichtung entgegenlaufenden oder entgegenwirkenden Richtung drehbar. Beispielsweise umfasst die Sensoranordnung einen Drehgeber, mittels welchem die aktuelle Drehrichtung des Maschinenträgers und/oder der Ausgangswelle des Zahnradgetriebes und/oder der Ausgangswelle der Stelleinrichtung erfassbar ist. Ergänzend oder alternativ umfasst die Sensoranordnung z.B. ein Windrichtungssensor, mittels welchem die aktuelle Windrichtung erfassbar ist. Aus der aktuellen Windrichtung lässt sich abschätzen, in welche Richtung der Maschinenträger und/oder die Ausgangswelle des Zahnradgetriebes und/oder die Ausgangswelle der Stelleinrichtung gedreht werden wird, sodass bereits vor oder mit Einsetzen der Drehbewegung eine Reduzierung des Verzahnungssiels herbeiführbar ist.

Der Triebstrang umfasst insbesondere alle Komponenten der Stelleinrichtung, mit welchen eine Bewegung, vorzugsweise eine Drehbewegung, zwischen dem Hauptantrieb und der Ausgangsseite des Zahnradgetriebes und/oder der Ausgangswelle des Zahnradgetriebes und/oder der Ausgangswelle der Stelleinrichtung übertragbar ist oder übertragen wird. Bevorzugt umfasst der Triebstrang das Zahnradgetriebe und/oder die Eingangswelle des Zahnradgetriebes und/oder die Ausgangswelle des Zahnradgetriebes und/oder die Antriebswelle und/oder die Ausgangswelle der Stelleinrichtung und/oder das Dämpfungsglied und/oder die Eingangswelle des Dämpfungsglieds und/oder die Ausgangswelle des Dämpfungsglieds und/oder den Impeller. Ferner umfasst der Triebstrang vorzugsweise den Hilfsantrieb.

Die Erfindung betrifft ferner eine Steuerungsanordnung, insbesondere für ein Giersystem einer Windkraftanlage, mit wenigstens zwei erfindungsgemäßen Steuervorrichtungen, wobei die Verzahnungsspiele der Zahnradgetriebe der Steuervorrichtungen mittels der Hilfsantriebe in einander entgegengesetzten und/oder einander entgegenwirkenden und/oder in gegenläufige Drehrichtungen reduzierbar sind oder reduziert werden. Werden mehrere Steuervorrichtungen und somit auch mehrere Zahnradgetriebe eingesetzt, können sich die Verzahnungsspiele der Zahnradgetriebe zu einem resultierenden Verzahnungsspiel aufsummieren. Durch die Steuerungsanordnung ist es möglich, das resultierende Verzahnungsspiel der Steuerungsanordnung zu reduzieren, insbesondere bis auf die Hälfte. Umfassen die Hilfsantriebe lediglich Federn, so werden durch diese die Eingangswellen gegen die Ausgangswellen in den beiden Steuervorrichtungen vorzugsweise in einander entgegengesetzte und/oder einander entgegenwirkende und/oder in gegenläufige Drehrichtungen, insbesondere rotatorisch, gespannt.

Die Erfindung betrifft ferner eine Windkraftanlage mit einer Tragstruktur, einem an der Tragstruktur um eine Gierachse drehbar gelagerten Maschinenträger und wenigstens einer oder wenigstens zwei Steuervorrichtungen, die jeweils wenigstens eine zwischen die Tragstruktur und den Maschinenträger geschaltete und einen Hauptantrieb und ein, insbesondere mit diesem gekoppeltes, Zahnradgetriebe umfassende Stelleinrichtung und einen in den Triebstrang der Stelleinrichtung geschalteten Hilfsantrieb umfassen, mittels welchem ein Verzahnungsspiel des jeweiligen Zahnradgetriebes reduzierbar ist. Bevorzugt ist das Verzahnungsspiel der Zahnradgetriebe mittels der Hilfsantriebe in einander entgegengesetzten oder gegenläufigen Drehrichtungen reduzierbar. Bei der oder den Steuervorrichtungen handelt es sich insbesondere um erfindungsgemäße Steuervorrichtungen, die gemäß allen in diesem Zusammenhang erläuterten Ausgestaltungen weitergebildet sein können. Die Windkraftanlage kann ein Luv-Läufer oder ein Lee-Läufer sein. Bevorzugt handelt es sich bei der Windkraftanlage aber um einen Lee-Läufer.

Die Erfindung wird nachfolgend anhand bevorzugter Ausführungsformen unter Bezugnahme auf die Zeichnung beschrieben. In der Zeichnung zeigen:
Fig. 1 eine schematische Seitenansicht einer Windkraftanlage,
Fig. 2 eine schematische Seitenansicht eines Maschinenträgers der Windkraftanlage nach Fig. 1 mit zwei Steuervorrichtungen gemäß einer ersten Ausführungsform,
Fig. 3 eine der Steuervorrichtungen nach Fig. 2 in perspektivischer Ansicht,
Fig. 4 die Steuervorrichtung nach Fig. 3 in Seitenansicht,
Fig. 5 eine schematische Schnittansicht der Steuervorrichtung entlang der aus Fig. 4 ersichtlichen Schnittlinie A-A und
Fig. 6 eine schematische Schnittansicht einer Steuervorrichtung gemäß einer zweiten Ausführungsform.

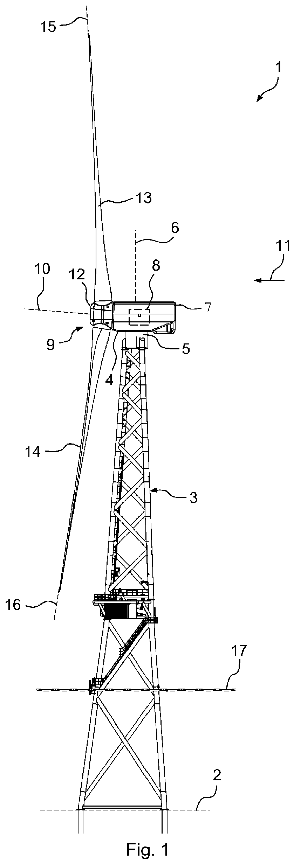

Aus Fig. 1 ist eine schematische Seitenansicht einer Windkraftanlage 1 ersichtlich, die im Meer angeordnet und im Meeresboden 2 verankert ist. Der Wasserspiegel des Meeres ist schematisch angedeutet und mit dem Bezugszeichen 17 gekennzeichnet. Die Windkraftanlage 1 umfasst eine Tragstruktur 3 in Form eines Gitterturms, auf der ein Maschinenträger 4 über ein Azimutlager 5 um eine vertikale Gierachse 6 drehbar gelagert ist. Der Maschinenträger 4 trägt ein Maschinenhaus 7, in dem ein elektrischer Generator 8 angeordnet ist. An dem Maschinenträger 4 ist ein Rotor 9 um eine Rotorachse 10 drehbar gelagert, die quer oder näherungsweise quer zur Gierachse 6 verläuft. Vorzugsweise ist die Rotorachse 10 aber geringfügig gegenüber der Horizontalen geneigt. Der Rotor 9 umfasst eine Rotornabe 12, an der zwei Rotorblätter 13 und 14 um ihre jeweilige Blattachse 15 bzw. 16 drehbar gelagert sind, wobei die Blattachsen 15 und 16 quer oder näherungsweise quer zur Rotorachse 10 verlaufen. Die Rotornabe 12 ist drehstarr mit einer Rotorwelle (nicht gezeigt) verbunden, mittels welcher der Rotor 9 mit dem Generator 8 verbunden ist. Der Rotor 9 wird durch Wind 11 um seine Rotorachse 10 gedreht und treibt den Generator 8 an.

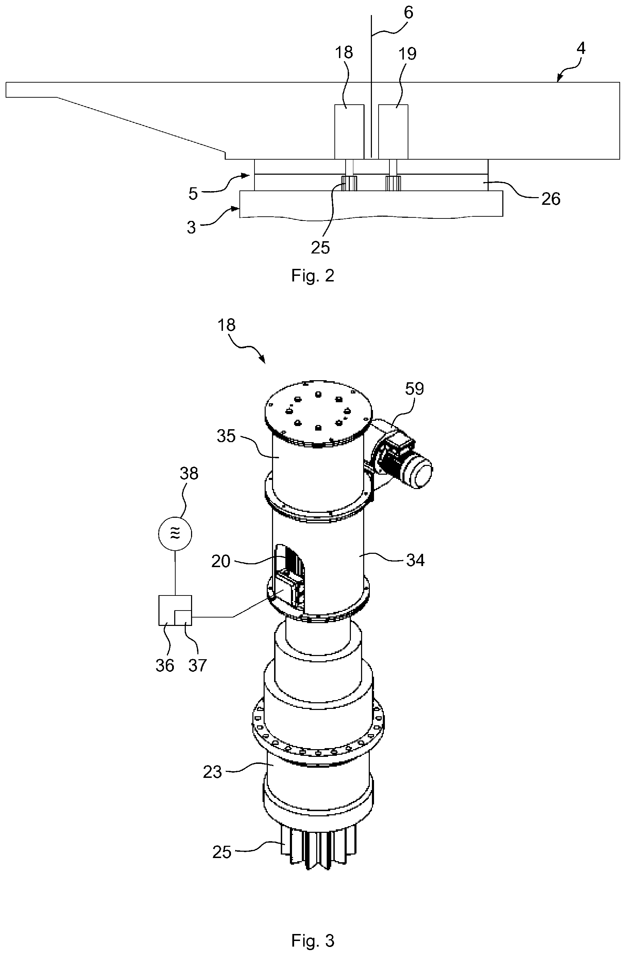

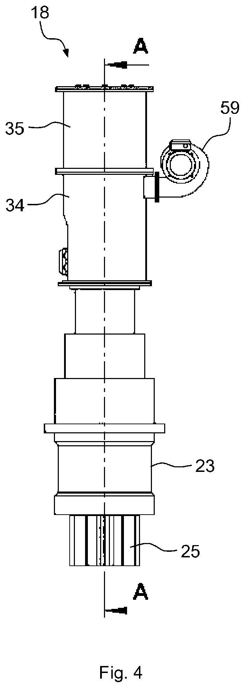

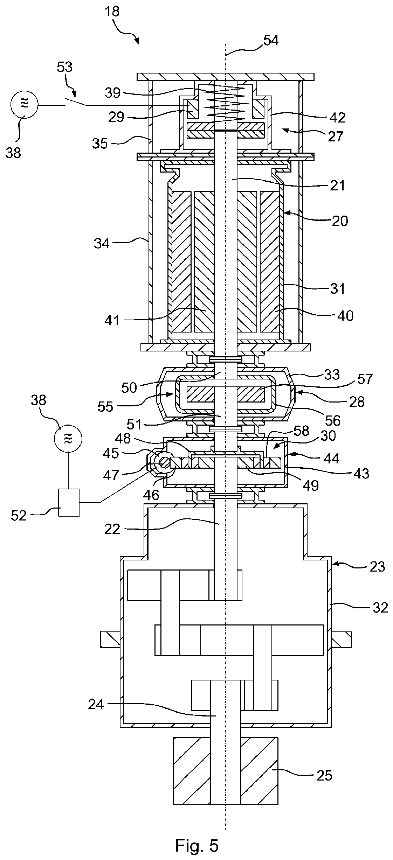

Aus Fig. 2 ist eine schematische Seitenansicht des Maschinenträgers 4 ersichtlich, an dem zwei Steuervorrichtungen 18 und 19 gemäß einer ersten Ausführungsform der Erfindung befestigt sind. Die Steuervorrichtungen 18 und 19 sind gleichartig aufgebaut, wobei eine perspektivische Ansicht der Steuervorrichtung 18 aus Fig. 3 ersichtlich ist. Ferner ist eine Seitenansicht der Steuervorrichtung 18 aus Fig. 4 und eine schematische Schnittansicht der Steuervorrichtung 18 entlang der in Fig. 4 dargestellten Schnittlinie A-A aus Fig. 5 ersichtlich.

Die Steuervorrichtung 18 umfasst einen Elektromotor 20, dessen Motorwelle 21 um eine Achse 54 drehbar und unter Zwischenschaltung eines Dämpfungsglieds in Form eines hydraulischen Dämpfers 28 und eines Planetengetriebes 30 mit einer Eingangswelle 22 eines Zahnradgetriebes 23 verbunden ist. Eine Ausgangswelle 24 des Getriebes 23 ist drehstarr mit einem Ritzel 25 verbunden, beispielsweise direkt oder unter Zwischenschaltung eines Kupplungsglieds. Alternativ kann die Ausgangswelle 24, insbesondere unter Zwischenschaltung eines Kupplungsglieds, auch drehweich mit dem Ritzel 25 verbunden sein. Das Ritzel 25 kämmt mit einem Zahnkranz 26 (siehe Fig. 2), der starr mit der Tragstruktur 3 verbunden und im oberen Endbereich der Tragstruktur 3 vorgesehen ist. Die Motorwelle 21 ist mit ihrem dem Dämpfer 28 abgewandten Ende mit einer Motorbremse 27 verbunden, die wenigstens einen Elektromagnet 29 umfasst, mittels welchem die Bremse 27 gegen die Kraft einer Feder 39 im gelösten Zustand gehalten wird, solange ein ausreichend großer elektrischer Strom durch den Elektromagneten 29 fließt. Bei Ausfall des Stroms nimmt die Bremse 27 automatisch ihren aus Fig. 5 ersichtlichen bremsenden Zustand an und blockiert die Motorwelle 21 des Elektromotors 20. Der Elektromotor 20 umfasst ein Motorgehäuse 31, welches einen Ständer des Elektromotors 20 bildet und elektrische Ständerwicklungen 40 umfasst. Ferner umfasst die Motorwelle 21 elektrische Läuferwicklungen 41 und bildet einen Läufer des Elektromotors 20. Ferner umfasst das Getriebe 23 ein Getriebegehäuse 32, der Dämpfer 28 umfasst ein Dämpfergehäuse 33, die Bremse 27 umfasst ein Bremsengehäuse 42 und das Planentengetriebe 30 ist in einem Gehäuse 43 angeordnet. Gemäß der Ausführungsform ist der Elektromotor 20 ferner in einem ersten Außengehäuse 34 angeordnet, wobei die Bremse 27 in einem zweiten Außengehäuse 35 angeordnet ist. An dem ersten Außengehäuse 34 ist ein Lüfter 59 vorgesehen, mittels welchem der Elektromotor 20 gekühlt wird. Alternativ können die Außengehäuse 34 und 35 aber auch durch ein gemeinsames Außengehäuse gebildet sein oder entfallen. Bilden die Außengehäuse 34 und 35 ein gemeinsames Außengehäuse, so wird dieses insbesondere mit einem Lüfter belüftet. Ferner kann das Gehäuse 34 auch den Dämpfer 28 und ggf. das Gehäuse 43 mit dem Planetengetriebe 30 umfassen. Die Gehäuse 31, 32, 33, 34, 35, 42 und 43 sind starr miteinander verbunden. Ferner sind diese Gehäuse starr mit dem Maschinenträger 4 verbunden.

Der Elektromotor 20 ist über eine Steuereinrichtung 36, die einen Frequenzumrichter 37 umfasst, mit einem elektrischen Netz 38 verbunden. Das elektrische Netz 38 bildet eine Stromversorgung für die Steuereinrichtung 36 und den Elektromotor 20. Ferner ist oder wird der Elektromagnet 29 aus dem elektrischen Netz 38 mit Strom versorgbar bzw. versorgt.

Ändert der Wind 11 seine Richtung, folgt der Maschinenträger 4 dieser Richtungsänderung und dreht sich um die Gierachse 6. Da die Windkraftanlage 1 als Lee-Läufer ausgebildet ist, verhält sich der Maschinenträger 4 näherungsweise wie eine Windfahne. Insbesondere versucht sich der Maschinenträger 4 so auszurichten, dass die Rotorachse 10 in Windrichtung 11 ausgerichtet ist. Während dieser Drehung, die auch als Gieren bezeichnet wird, wird das Ritzel 25 gedreht, welches unter Zwischenschaltung des Getriebes 23, des Planetengetriebes 30 und des Dämpfers 28 die Motorwelle 21 dreht. Der Elektromotor 20 wird mittels der Steuereinrichtung 36 derart angesteuert, dass diese Drehbewegung gedämpft wird. Dies ist von Vorteil, da abrupte Windrichtungsänderungen zu starken Belastungen der Windkraftanlage 1 führen können. Ferner ist durch das Dämpfen ein Überschwingen des Maschinenträgers 4 vermeidbar oder zumindest reduzierbar. Die Steuereinrichtung 36 passt die Dämpfung dabei derart an, dass die Belastung der Windkraftanlage 1 möglichst gering gehalten wird. Der Elektromotor 20, das Getriebe 23 und die Steuereinrichtung 36 bilden zusammen eine Stelleinrichtung. Ferner können der Dämpfer 28 und/oder das Planetengetriebe 30 der Stelleinrichtung zugerechnet werden.

Fällt das Netz 38 aus, so ist eine gesteuerte Dämpfung der Gierbewegung des Maschinenträgers 4 nicht mehr durch die Steuereinrichtung 36 im Zusammenwirken mit dem Elektromotor 20 erzielbar. Da aber auch der Elektromagnet 29 durch das Netz 38 versorgt wird, fällt bei einem Ausfall des Netzes 38 auch der Elektromagnet 29 aus, sodass die Motorwelle 21 automatisch durch die Bremse 27 blockiert wird. Eine Dämpfung einer insbesondere durch Wind hervorgerufenen Gierbewegung des Maschinenträgers 4 ist aber auch bei blockierter Motorwelle 21 noch durch den Dämpfer 28 sichergestellt. Zwar ist der Dämpfer 28 ein passiver Dämpfer, sodass die durch ihn bewirkte Dämpfung nicht immer optimal eingestellt werden kann, gleichwohl ist es mit dem Dämpfer 28 möglich, zu starke Belastungen der Windkraftanlage 1 und ein zu starkes Überschwingen des Maschinenträges 4 in weiten Bereichen zu vermeiden.

Ist das Netz 38 wieder vorhanden, wird der Elektromagnet 29 bestromt und gibt die Motorwelle 21 wieder frei. Ferner nimmt die Steuereinrichtung 36 wieder ihren Betrieb auf und steuert die Dämpfung der Gierbewegungen des Maschinenträgers 4.

Es ist aber auch bei vorhandener Stromversorgung 38 ein Blockieren der Motorwelle 21 mittels der Bremse 27 möglich, insbesondere indem der Elektromagnet 29 nicht mehr in ausreichendem Maße bestromt wird. Beispielsweise kann der Elektromagnet 29 hierzu durch einen schematisch dargestellten Schalter 53 von der Stromversorgung 38 getrennt werden. In diesem Fall wird der Elektromotor 20 bevorzugt nicht durch die Steuereinrichtung 36 angesteuert. Ein Blockieren der Motorwelle 21 bei vorhandener Stromversorgung ist z.B. dann sinnvoll, wenn der Maschinenträger 4 in einer bestimmten Stellung relativ zu der Tragstruktur 3 verharren soll. Eine Dämpfung einer insbesondere durch Wind hervorgerufenen Gierbewegung des Maschinenträgers 4 kann dann durch den Dämpfer 28 sichergestellt werden.

Das Planetengetriebe 30 ist Teil eines Hilfsantriebs 44, der einen elektrischen Hilfsmotor 45 umfasst, mittels welchem das innenverzahnte Hohlrad 46 des Planetengetriebes 30 relativ zu dem Gehäuse 43 um die Achse 54 drehbar ist. Der Hilfsmotor 45 ist dazu mit einer Schnecke 47 verbunden, die mit einer Außenverzahnung des Hohlrads 46 kämmt. Der Planetenträger 48 des Planetengetriebes 30 ist drehstarr mit einer Ausgangswelle 51 des Dämpfers 28 verbunden, und das Sonnenrad 49 des Planetengetriebes 30 ist drehstarr mit der Eingangswelle 22 des Getriebes 23 verbunden. Ferner ist eine Eingangswelle 50 des Dämpfers 28 drehstarr mit der Motorwelle 21 verbunden. Durch Drehen des Hohlrads 46 mittels des Hilfsmotors 45 ist die Eingangswelle 22 im Umfang des Verzahnungsspiels des Getriebes 23 relativ zu der Ausgangswelle 24 drehbar. Somit ist es möglich, durch geeignete Ansteuerung des Hilfsmotors 45 das Verzahnungsspiel des Getriebes 23 zu reduzieren. Der Hilfsmotor 45 ist dazu mit einer schematisch angedeuteten Hilfssteuerung 52 verbunden. Ferner werden der Hilfsmotor 45 und die Hilfssteuerung 52 durch die Stromversorgung 38 mit elektrischem Strom versorgt. Der Hilfsantrieb 44 bildet somit einen Verzahnungsspielreduzierantrieb. An dem Planetenträger 48 sind Planetenräder 58 drehbar gelagert, die zwischen dem Sonnenrad 49 und dem Hohlrad 46 angeordnet sind und sowohl mit dem Sonnenrad 49 als auch mit dem Hohlrad 46 kämmen.

Der Hilfsantrieb 44 umfasst bevorzugt eine Hilfsbremse, mittels welcher das Hohlrad 46 und/oder der Hilfsmotor 45 blockierbar ist. Somit ist es möglich, die Verzahnungsspielreduzierfunktion des Hilfsantriebs 45 zu deaktivieren. Insbesondere wird in diesem Fall der Hilfsmotor 45 nicht mittels der Hilfssteuerung 52 angesteuert. Bevorzugt wird das Hohlrad 46 und/oder der Hilfsmotor 45 mittels der Hilfsbremse bei einem Ausfall der Stromversorgung 38 automatisch blockiert.

Der Dämpfer 28 umfasst einen Impeller 55 mit einem drehstarr mit der Eingangswelle 50 des Dämpfers 28 verbundenen Impellergehäuse 56 und einem in diesem drehbaren Innenteil 57, welches drehstarr mit der Ausgangswelle 51 des Dämpfers 28 verbunden ist. Ferner ist in das Impellergehäuse 56 eine Hydraulikflüssigkeit eingebracht. Bevorzugt umfasst der Dämpfer 28 ferner eine Bremse, mittels welcher das Impellergehäuse 56 bei Ausfall der Stromversorgung 38 automatisch blockierbar ist. Somit ist es möglich, die Dämpfungsfunktion des Dämpfers bei Ausfall der Stromversorgung 38 automatisch zu aktivieren. Die Bremse des Dämpfers 38 kann alternativ oder ergänzend zu der Bremse 27 vorgesehen sein.

Das Verzahnungsspiel des Zahnradgetriebes 23 der Steuervorrichtung 18 und das Verzahnungsspiel des Zahnradgetriebes der Steuervorrichtung 19 können sich zu einem resultierenden Verzahnungsspiel aufsummieren. Bevorzugt werden daher die Verzahnungsspiele der Steuervorrichtungen 18 und 19 in einander entgegengesetzten und/oder einander entgegenwirkenden Drehrichtungen reduziert. Somit ist es möglich, das resultierende Verzahnungsspiel zu reduzieren.

Insbesondere sind wenigstens die beiden Steuervorrichtungen 18 und 19 vorhanden. Vorteilhaft sind aber auch noch zusätzliche Steuervorrichtungen vorhanden, sodass eine stärkere Dämpfung aufgebracht werden kann. Bevorzugt sind die Steuereinrichtungen 36 aller Steuervorrichtungen miteinander vernetzt, sodass, wenn eine stärkere Dämpfung erforderlich ist, zusätzliche Steuervorrichtungen zugeschaltet werden können. Ist eine schwächere Dämpfung ausreichend, die beispielsweise mit lediglich einer oder zwei Steuervorrichtungen aufgebracht werden kann, können die zusätzlichen Steuervorrichtungen wieder deaktiviert werden.

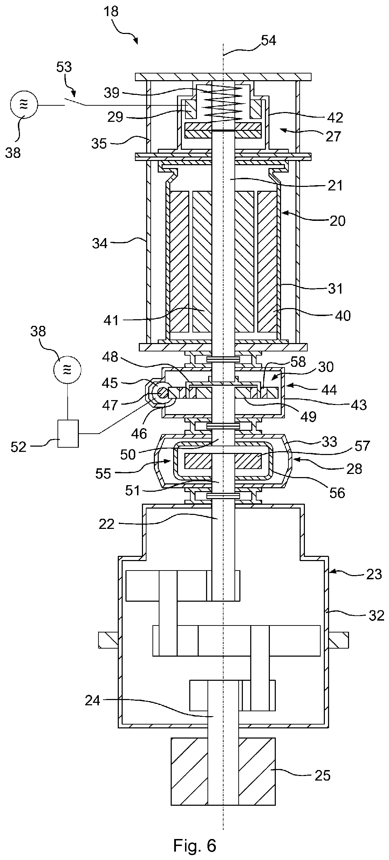

Aus Fig. 6 eine schematische Schnittansicht einer Steuervorrichtung 18 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind. Gemäß der zweiten Ausführungsform ist lediglich die Anordnung von Dämpfer 28 und Hilfsantrieb 44 vertauscht. Somit ist der Planetenträger 48 des Planetengetriebes 30 drehstarr mit der Motorwelle 21 verbunden, und das Sonnenrad 49 des Planetengetriebes 30 ist drehstarr mit der Eingangswelle 50 des Dämpfers 28 verbunden, dessen Ausgangswelle 51 drehstarr mit der Eingangswelle 22 des Getriebes 23 verbunden ist. Zur weiteren Beschreibung der zweiten Ausführungsform wird auf die Beschreibung der ersten Ausführungsform verwiesen. Insbesondere kann die Steuervorrichtung gemäß der zweiten Ausführungsform die Steuervorrichtung gemäß der ersten Ausführungsform ersetzen.

### Bezugszeichenliste

- 1: Windkraftanlage
- 2: Meeresboden
- 3: Tragstruktur
- 4: Maschinenträger
- 5: Azimutlager
- 6: Gierachse
- 7: Maschinenhaus
- 8: elektrischer Generator
- 9: Rotor
- 10: Rotorachse
- 11: Wind
- 12: Rotornabe
- 13: Rotorblatt
- 14: Rotorblatt
- 15: Blattachse
- 16: Blattachse
- 17: Wasserspiegel
- 18: Steuervorrichtung
- 19: Steuervorrichtung
- 20: Elektromotor
- 21: Motorwelle
- 22: Eingangswelle des Zahnradgetriebes
- 23: Zahnradgetriebe
- 24: Ausgangswelle des Zahnradgetriebes
- 25: Ritzel
- 26: Zahnkranz
- 27: Motorbremse
- 28: Dämpfer
- 29: Elektromagnet
- 30: Planetengetriebe
- 31: Motorgehäuse
- 32: Getriebegehäuse
- 33: Dämpfergehäuse
- 34: erstes Außengehäuse
- 35: zweites Außengehäsue
- 36: Steuereinrichtung
- 37: Frequenzumrichter
- 38: elektrisches Netz / Stromversorgung
- 39: Feder der Motorbremse
- 40: Ständerwicklung
- 41: Läuferwicklung
- 42: Bremsengehäuse
- 43: Gehäuse des Hilfsantriebs
- 44: Hilfsantrieb
- 45: Hilfsmotor
- 46: Hohlrad des Planetengetriebes
- 47: Schnecke
- 48: Planetenträger des Planetengetriebes
- 49: Sonnenrad des Planetengetriebes
- 50: Eingangswelle des Dämpfers
- 51: Ausgangswelle des Dämpfers
- 52: Hilfssteuerung
- 53: elektrischer Schalter
- 54: Achse
- 55: Impeller des Dämpfers
- 56: Impellergehäuse des Dämpfers
- 57: Innenteil des Dämpfers
- 58: Planetenrad des Planetengetriebes
- 59: Lüfter

## Patentansprüche

1. Steuervorrichtung für ein Giersystem einer Windkraftanlage, mit wenigstens einer zwischen eine Tragstruktur (3) und einen an der Tragsstruktur (3) um eine Gierachse (6) drehbar gelagerten Maschinenträger (4) geschalteten und einen Hauptantrieb (20) und ein Zahnradgetriebe (23) umfassenden Stelleinrichtung und einem in den Triebstrang der Stelleinrichtung geschalteten Hilfsantrieb (44), mittels welchem ein Verzahnungsspiel des Zahnradgetriebes (23) reduzierbar ist, **dadurch gekennzeichnet, dass** der Hilfsantrieb (44) einen Hilfsmotor (45) und ein einen Planententräger (48), ein Sonnenrad (49) und ein innenverzahntes Hohlrad (46) umfassendes Planetengetriebe (30) aufweist, welches mit seinem Planetenträger (48) und mit seinem Sonnenrad (49) in den Triebstrang der Stelleinrichtung geschaltet ist, wobei das Hohlrad (46) durch den Hilfsmotor (45) drehbar ist.

2. Steuervorrichtung nach Anspruch 1, **dadurch gekennzeichnet, dass** eine Eingangswelle (22) des Zahnradgetriebes (23) mittels des Hilfsantriebs (44) unter Reduzierung des Verzahnungsspiels relativ zu einer Ausgangswelle (24) des Zahnradgetriebes (23) drehbar ist.

3. Steuervorrichtung nach Anspruch 1 oder 2, **dadurch gekennzeichnet, dass** das Planentengetriebe (30) zwischen den Hauptantrieb (20) und das Zahnradgetriebe (23) geschaltet ist.

4. Steuervorrichtung nach Anspruch 3, **dadurch gekennzeichnet, dass** zwischen den Hauptantrieb (20) und das Planentengetriebe (30) oder zwischen das Planetengetriebe (30) und das Zahnradgetriebe (23) ein Dämpfungsglied (28) geschaltet ist, mittels welchem eine Drehbewegung des Maschinenträgers (4) relativ zu der Tragstruktur (3) um die Gierachse (6) dämpfbar ist.

5. Steuervorrichtung nach einem der vorangehenden Ansprüche, **dadurch gekennzeichnet, dass** der Planetenträger (48) mit einer Antriebswelle (21) des Hauptantriebs (20) oder mit einer Ausgangswelle (51) des Dämpfungsglieds (28) und das Sonnenrad (49) mit der oder einer Eingangswelle (50; 22) des Dämpfungsglieds (28) oder des Zahnradgetriebes (23) verbunden ist.

6. Steuervorrichtung nach Anspruch 5, **dadurch gekennzeichnet, dass** eine Ausgangswelle (24) des Zahnradgetriebes (23) mit dem Maschinenträger (4) oder mit der Tragstruktur (3) gekoppelt ist.

7. Steuervorrichtung nach einem der vorangehenden Ansprüche, **dadurch gekennzeichnet, dass** der Hilfsantrieb (45) eine Hilfsbremse umfasst, mittels welcher das Hohlrad (46) blockierbar ist.

8. Steuervorrichtung nach Anspruch 7, **dadurch gekennzeichnet, dass** bei Ausfall einer elektrischen Stromversorgung (38) des Hauptantriebs (20) das Hohlrad (46) mittels der Hilfsbremse automatisch blockierbar ist.

9. Steuervorrichtung nach einem der vorangehenden Ansprüche, **gekennzeichnet durch** eine Antriebsbremse (27), mittels welcher der Hauptantrieb (20) blockierbar ist.

10. Steuervorrichtung nach Anspruch 9, **dadurch gekennzeichnet, dass** bei Ausfall der oder einer elektrischen Stromversorgung des Hauptantriebs (20) der Hauptantrieb (20) mittels der Antriebsbremse (27) automatisch blockierbar ist.

11. Steuerungsanordnung für ein Giersystem einer Windkraftanlage, mit wenigstens zwei Steuervorrichtungen (18, 19) nach einem der vorangehenden Ansprüche, **dadurch gekennzeichnet, dass** die Verzahnungsspiele der Zahnradgetriebe mittels der Hilfsantriebe in einander entgegengesetzten Richtungen reduzierbar sind.

## Claims

1. Control device for a yaw system of a wind turbine, having at least one actuating device, which comprises a main drive (20) and a gear train (23) and is connected between a supporting structure (3) and a machine carrier (4), which is mounted on the supporting structure (3) such that it is rotatable about a yaw axis (6), and an auxiliary drive (44), which is connected into the drive train of the actuating device and by means of which a gearing play of the gear train (23) can be reduced, **characterised in that** the auxiliary drive (44) has an auxiliary motor (45) and a planetary gear (30), which comprises a planetary carrier (48), a sun gear (49) and an internally toothed ring gear (46) and is connected with its planetary carrier (48) and with its sun gear (49) into the drive train of the actuating device, wherein the ring gear (46) is rotatable by means of the auxiliary motor (45).

2. Control device according to Claim 1, **characterised in that** an input shaft (22) of the gear train (23) is rotatable relative to an output shaft (24) of the gear train (23) by means of the auxiliary drive (44), reducing the gearing play.

3. Control device according to Claim 1 or 2, **characterised in that** the planetary gear (30) is connected between the main drive (20) and the gear train (23).

4. Control device according to Claim 3, **characterised in that** a damping element (28), by means of which a rotational movement of the machine carrier (4) relative to the supporting structure (3) about the yaw axis (6) can be damped, is connected between the main drive (20) and the planetary gear (30) or between the planetary gear (30) and the gear train (23).

5. Control device according to any one of the preceding claims, **characterised in that** the planetary carrier (48) is connected to a drive shaft (21) of the main drive (20) or to an output shaft (51) of the damping element (28) and the sun gear (49) is connected to the or an input shaft (50;22) of the damping element (28) or the gear train (23).

6. Control device according to Claim 5, **characterised in that** an output shaft (24) of the gear train (23) is coupled to the machine carrier (4) or to the supporting structure (3).

7. Control device according to any one of the preceding claims, **characterised in that** the auxiliary drive (45) comprises an auxiliary brake by means of which the ring gear (46) can be blocked.

8. Control device according to Claim 7, **characterised in that**, in the event of a failure of an electric power supply (38) of the main drive (20), the ring gear (46) can be blocked automatically by means of the auxiliary brake.

9. Control device according to any one of the preceding claims, **characterised by** a drive brake (27) by means of which the main drive (20) can be blocked.

10. Control device according to Claim 9, **characterised in that**, in the event of a failure of the or an electric power supply of the main drive (20), the main drive (20) can be blocked automatically by means of the drive brake (27).

11. Control arrangement for a yaw system of a wind turbine, having at least two control devices (18, 19) according to any one of the preceding claims, **characterised in that** the gearing plays of the gear train can be reduced by means of the auxiliary drives in mutually opposed directions.

## Revendications

1. Dispositif de commande pour un système de lacet d'une éolienne, avec au moins un dispositif de réglage branché entre une structure porteuse (3) et un support de machine (4) logé de manière rotative autour d'un axe de lacet (6) sur la structure porteuse (3) et comprenant un dispositif d'entraînement principal (20) et un engrenage (23) et un dispositif d'entraînement auxiliaire (44) branché dans la chaîne d'entraînement du dispositif de réglage, au moyen duquel un jeu de denture de l'engrenage (23) peut être réduit, **caractérisé en ce que** le dispositif d'entraînement auxiliaire (44) comprend un moteur auxiliaire (45) et un engrenage planétaire (30), comprenant un porte-satellites (48), une roue planétaire (49) et une couronne à denture intérieure (46), qui est branché, avec son porte-satellites (48) et sa roue planétaire (49), dans la chaîne d'entraînement du dispositif de réglage, la couronne (46) pouvant être mise en rotation par le moteur auxiliaire (45).

2. Dispositif de commande selon la revendication 1, **caractérisé en ce qu'**un arbre d'entrée (22) de l'engrenage (23) peut être mis en rotation au moyen du dispositif d'entraînement auxiliaire (44) en réduisant le jeu de denture par rapport à un arbre de sortie (24) de l'engrenage (23).

3. Dispositif de commande selon la revendication 1 ou 2, **caractérisé en ce que** l'engrenage planétaire (30) est branché entre le dispositif d'entraînement principal (20) et l'engrenage (23).

4. Dispositif de commande selon la revendication 3, **caractérisé en ce que**, entre le dispositif d'entraînement principal (20) et l'engrenage planétaire (30) ou entre l'engrenage planétaire (30) et l'engrenage (23), est branché un organe d'amortissement (28) au moyen duquel un mouvement de rotation du support de machine (4) par rapport à la structure porteuse (3) autour de l'axe de lacet (6) peut être amorti.

5. Dispositif de commande selon l'une des revendications précédentes, **caractérisé en ce que** le porte-satellites (48) est relié avec un arbre d'entraînement (21) du dispositif d'entraînement principal (20) ou avec un arbre de sortie (51) de l'organe d'amortissement (28) et la roue planétaire (49) est reliée avec l'arbre ou un arbre d'entrée (50 ; 22) de l'organe d'amortissement (28) ou de l'engrenage (23).

6. Dispositif de commande selon la revendication 5, **caractérisé en ce qu'**un arbre de sortie (24) de l'engrenage (23) est couplé avec le support de machine (4) ou avec la structure porteuse (3).

7. Dispositif de commande selon l'une des revendications précédentes, **caractérisé en ce que** le dispositif d'entraînement auxiliaire (45) comprend un frein auxiliaire permettant de bloquer la couronne (46).

8. Dispositif de commande selon la revendication 7, **caractérisé en ce que**, lors d'une panne de l'alimentation électrique (38) du dispositif d'entraînement principal (20), la couronne (46) peut être bloquée automatiquement au moyen du frein auxiliaire.

9. Dispositif de commande selon l'une des revendications précédentes, **caractérisé par** un frein d'entraînement (27) permettant de bloquer le dispositif d'entraînement principal (20).

10. Dispositif de commande selon la revendication 9, **caractérisé en ce que**, lors d'une panne de l'alimentation ou d'une alimentation électrique du dispositif d'entraînement principal (20), le dispositif d'entraînement principal (20) peut être bloqué automatiquement par le frein d'entraînement (27).

11. Système de commande pour un système de lacet d'une éolienne, avec au moins deux dispositifs de commande (18, 19) selon l'une des revendications précédentes, **caractérisé en ce que** les jeux de dentures de l'engrenage peuvent être réduites au moyen des dispositifs d'entraînement auxiliaires dans des directions opposées entre elles.
